# EUROPEAN PATENT APPLICATION

(11) **EP 4 745 790 A1**
(43) Date of publication of application: **20.05.2026**
(21) Application number: 25215223.6
(22) Date of filing: 12.11.2025
(51) Int. Cl.: G06F 12/0846, G06F 12/0864

(54) **MEMORY DEVICE AND METHOD WITH PRE-READ ACCELERATION TECHNIQUES**

(30) Priority: 13.11.2024 KR 20240161477
(71) Applicant: Samsung Electronics Co., Ltd., Suwon-si, Gyeonggi-do 16677 (KR)
(72) Inventor: Kim, Yoojin, 16678 Suwon-si, Gyeonggi-do (KR); Kim, Jinseong, 16678 Suwon-si, Gyeonggi-do (KR); Nam, Jihoon, 16678 Suwon-si, Gyeonggi-do (KR); Park, Jihye, 16678 Suwon-si, Gyeonggi-do (KR); Park, Jinsu, 16678 Suwon-si, Gyeonggi-do (KR); Cho, Yeongon, 16678 Suwon-si, Gyeonggi-do (KR)
(74) Representative: Grünecker Patent- und Rechtsanwälte PartG mbB

(57) **Abstract**

A memory device performs determining whether a read request received from a host is hit in a cache in response to the read request, and at least one of operations for determining data corresponding to the read request in parallel in a memory processing unit. The memory device returns data obtained from a memory module through the memory processing unit to the host in a case of a cache miss, and returns data hit in the cache to the host in a case of a cache hit.

## Description

### BACKGROUND

### 1. Field

The following description relates to a memory device and an operating method with pre-read acceleration techniques.

### 2. Description of Related Art

As applications requiring a large amount of memory such as big data and/or machine learning are widely used, data centers are increasingly demanding larger-capacity memory devices. To meet this demand, research has been actively seeking devices that may expand a main memory, however, expanding memory capacity by adding memory devices may increase a total cost of ownership (TCO) of a data center due to device purchasing cost and additional power consumption of the devices. A compression memory technology is gaining attention as a method to effectively reduce the TCO of a data center by increasing the overalls storage density and utilization of the memory devices. While the compression memory technology may improve effective capacity of a memory device by compressing data and storing the data in the memory device, retrieval latency may suffer.

### SUMMARY

The invention is claimed in the independent claims. Preferred embodiments are specified in the dependent claims.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a memory device includes: a cache configured to make a cache-hit determination, in response to a read request from a host, the cache-hit determination determining whether the read request results in a hit to the cache; a pre-request manager configured to provide a memory processing unit with a pre-request for performing at least one operation of operations for determining data corresponding to the read request before completion of the determination of whether the read request results in a hit in the cache, wherein the pre-request corresponds to the read request or is a copy of the read request; and the memory processing unit configured to perform the at least one operation in response to the reception of the pre-request, wherein, data obtained from a memory module through the memory processing unit based on the pre-request is returned to the host in a case of the cache-hit determination determining a cache miss has occurred, and data hit in the cache is returned to the host in a case of the cache-hit determination determining a cache hit.

The pre-request manager may be configured to instruct the memory processing unit to abort an operation subsequent to the at least one operation in response to the cache-hit determination determining a cache hit for the read request.

The pre-request manager may be configured to provide the memory processing unit with a read request including an abort flag value in response to the cache-hit determination determining a cache hit for the read request, and the memory processing unit may be configured to remove a response corresponding to the read request including the abort flag value without subsequent processing of the response to the read request including the abort flag value in a memory response queue.

The pre-request manager may be configured to notify the memory processing unit of aborting of the read request in response to the cache-hit determination determining a cache hit for the read request, and the memory processing unit may be configured to remove the read request from a memory request queue or to deactivate the read request in the memory request queue.

The memory processing unit may be configured to perform an operation subsequent to the at least one operation in response to the cache-hit determination determining a cache miss for the read request.

The at least one operation may include a data loading operation corresponding to the read request, the data loading operation loading data from the memory module, and the memory processing unit may be configured to start the data loading operation before the cache-hit determination is completed.

The memory processing unit may be configured to: receive the data corresponding to the read request from the memory module before the cache-hit determination is completed; and in response to the cache-hit determination determining a cache miss for the read request, obtain data to be returned to the host based on data loaded from the memory module.

The at least one operation may include an address translation operation for the read request, and the memory processing unit may be configured to start the address translation operation for the read request before the cache-hit determination is completed.

The memory processing unit may be configured to: perform translation of an address corresponding to the read request before the cache-hit determination is completed; and in response to the cache-hit determination determining a cache miss for the read request, load data from the memory module using the translated address and obtain data to be returned to the host using the loaded data.

The memory device may be configured to update data, which is to be returned to the host, into the cache, in response to the cache-hit determination determining a cache miss for the read request.

In another general aspect, a method of operating a memory device includes: making a cache-hit determination for a read request received from a host in response to the read request; providing a memory processing unit with a pre-request for performing at least one operation of operations for determining data corresponding to the read request before completion of the cache-hit determination of the read request, wherein the pre-request corresponds to the read request or is a copy of the read request; performing the at least one operation in response to the reception of the pre-request; and returning data obtained from a memory module through the memory processing unit to the host in a case of the cache-hit determination determining a cache miss, and returning data hit in the cache to the host in a case of the cache-hit determination determining a cache hit.

The returning of the data to the host may include instructing the memory processing unit to abort an operation subsequent to the at least one operation in response to the cache-hit determination determining a cache hit for the read request.

The returning of the data to the host may include: providing the memory processing unit with a read request including an abort flag value in response to the cache-hit determination determining a cache hit for the read request; and removing a response corresponding to the read request including the abort flag value without subsequent processing of the response to the read request including the abort flag value in a memory response queue.

The returning of the data to the host may include: notifying the memory processing unit of aborting of the read request in response to the cache-hit determination determining a cache hit occurring for the read request; and removing the read request from a memory request queue of the memory processing unit or deactivating the read request in the memory request queue.

The returning of the data to the host may include: performing, by the memory processing unit, an operation subsequent to the at least one operation in response to the cache-hit determination determining a cache miss for the read request.

The at least one operation may include a data loading operation corresponding to the read request, the data loading operation may include loading the data corresponding to read request from the memory module, and the providing of the memory processing unit with the pre-request may include starting the data loading operation by the memory processing unit before the cache-hit determination is completed.

The performing of the at least one operation in response to the reception of the pre-request may include receiving the data corresponding to the read request from the memory module before the cache-hit determining is completed, and the returning of the data to the host may include, in response to the cache-hit determination determining a cache miss for the read request, obtaining data to be returned to the host based on data loaded from the memory module.

The at least one operation may include an address translation operation for the read request, and the providing of the memory processing unit with the pre-request may include starting the address translation operation for the read request by the memory processing unit before the cache-hit determination is completed.

The performing of the at least one operation in response to the reception of the pre-request may include performing translation of an address corresponding to the read request before the cache-hit determination is completed, and the returning of the data to the host may include, in response to the cache-hit determination determining a cache miss for the read request, loading data from the memory module using the translated address and obtaining data to be returned to the host using the loaded data.

The returning of the data to the host may include updating data to be returned to the host into the cache, in response to the cache-hit determination determining a cache miss for the read request.

In another general aspect, a method is performed by a compressed memory device that includes a cache and a memory module storing compressed data, and the method includes: receiving, from a host, a read request for data, the read request including a host address; based on the read request, making a determination that a cache-hit occurs for the host address in the cache; based on receiving the read request, and before the determining of the cache-hit is completed, initiating operations to retrieve the data from memory module; and based on the determining that the cache-hit occurred, aborting or not completing the operations to retrieve the data from the memory module.

The operations may include translating the host address to a memory address in the memory module.

The operations may include decompressing the requested data from the memory module.

Other features and aspects will be apparent from the following detailed description, the drawings, and the claims.

### BRIEF DESCRIPTION OF THE DRAWINGS

FIG. 1 illustrates a computing system, according to one or more embodiments.
FIG. 2 illustrates a memory device, according to one or more embodiments.
FIG. 3 illustrates an example of a method of operating a memory device, according to one or more embodiments.
FIG. 4 illustrates an example of an operation in a case of a cache hit and an operation in a case of a cache miss, according to one or more embodiments.
FIG. 5 illustrates an example of a memory device in which a memory processing unit is a compressor, according to one or more embodiments.
FIGS. 6 and 7 illustrate an example in which a memory device including a compressor processes a response from a memory module according to whether a cache hit occurs, according to one or more embodiments.
FIGS. 8 and 9 illustrate an example in which a memory device including a compressor processes a request for a memory module according to whether a cache hit occurs, according to one or more embodiments.

Throughout the drawings and the detailed description, unless otherwise described or provided, the same or like drawing reference numerals will be understood to refer to the same or like elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

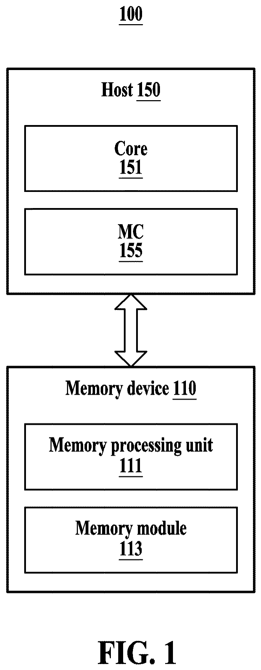

FIG. 1 illustrates a computing system, according to one or more embodiments.

A computing system 100 according to an example may include a host 150 and a memory device 110. For example, the memory device 110 may be separated from a host processor, e.g., by a bus, a memory channel, a memory-over-IP fabric, or the like.

The host 150 (e.g., a host central processing unit (CPU)) is a main management entity of the computing system 100 (e.g., an electronic device) and may be implemented as a host processor or as a server. The host processor may include, for example, a host CPU. For example, the host processor may include a processor core 151 and a memory controller (MC) 155. The MC 155 may control the memory device 110 (e.g., by executing a memory management unit, a dedicated memory controller, or the like). The MC 155 may transmit an instruction to the memory device 110. Further, the host processor may process data received from the memory device 110 using the processor core 151.

The memory device 110 may process data in a memory area (e.g., in a module 113) described below by cooperating with the host processor. The memory device 110 may control the memory area in response to the instruction from the host processor. The memory device 110 may process data based on an instruction (e.g., a read instruction or a write instruction) received from the host processor. According to the instruction, the memory device 110 may read data from the memory area or write data in the memory area. To facilitate these operations, the memory device 110 may include a memory processing unit 111 and the memory module 113.

The memory module 113 may store data. The memory module 113 may include be a block-based device that internally manages memory blocks that form a memory area. The memory area be a physical area that stores data (in block units), and may be read-from and written-to a memory chip of the physical memory device 110. The memory area may be disposed in (or in the form of) a memory die (or a core die) of the memory device 110. The memory blocks may reside on a portion or all of the memory chips of the memory device 110. For example, each memory block may correspond to a memory bank, and the memory blocks may be grouped by memory rank and/or memory channel. For example, a memory rank may be a set of memory chips (e.g., dynamic random-access memory (DRAM) chips) connected to the same chip select and thus accessible simultaneously. A memory channel may be a set of memory chips accessible via the same channel (e.g., memory channel).

The memory processing unit 111 may perform a specific operation that plays a primary role of returning, to the host 150, data corresponding to an instruction received by the memory device 110 from the host 150. The memory processing unit 111 may access a memory (e.g., a memory block) of the memory module 113, and perform the specified operation (e.g., a decompression operation or a quantization operation) using a value recorded on the accessed memory block. The memory processing unit 111 may be an assembly of logic elements (e.g., a logic circuit) manufactured and/or implemented to include a logic for the specific operation.

The host processor oversees the entire operation, whereas the memory device 110 may perform the specific operation independently of the host. For example, when the memory device 110 receives from the host 150 a read request for compressed data, the decompression operation (performed by the memory device) may be required for the memory device 110 to return the value requested by the read request. The memory processing unit 111 may perform the decompression operation as the aforementioned specific operation, and the memory device 110 may return a decompressed result (e.g., decompressed data or value) to the host 150.

When the memory processing unit 111 is implemented as a processing near memory (PNM) unit, the specific operation may be referred to as a PNM operation, and when the memory processing unit 111 is implemented as a processing in memory (PIM) unit, the specific operation may be referred to as a PIM operation. The memory device 110 including the PNM unit may also be referred to as a PNM memory device, and the memory device 110 including the PIM unit may also be referred to as a PIM memory device. The PNM memory device or the PIM memory device may include, for example, an acceleration dual in-line memory module (AXDIMM), a compute express link-AXDIMM (CXL-AXDIMM), and a CXL-disaggregated memory pool (DMP).

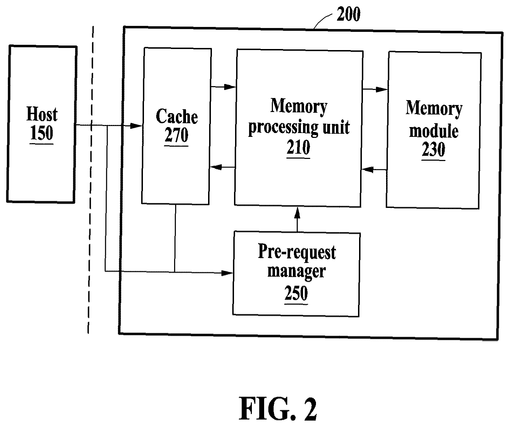

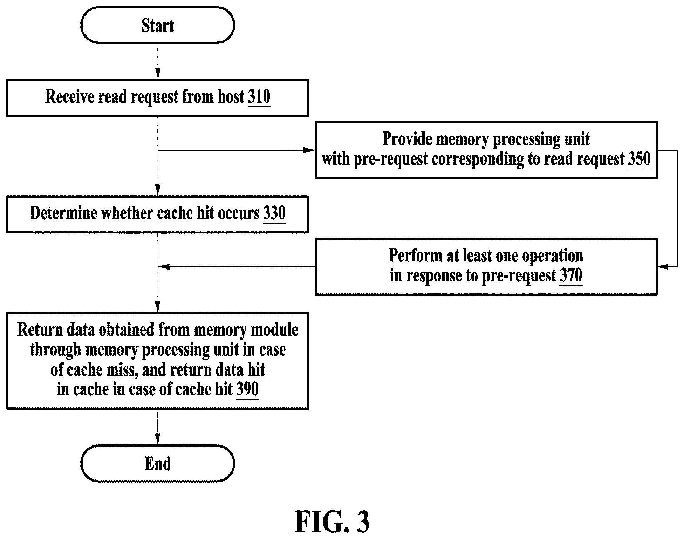

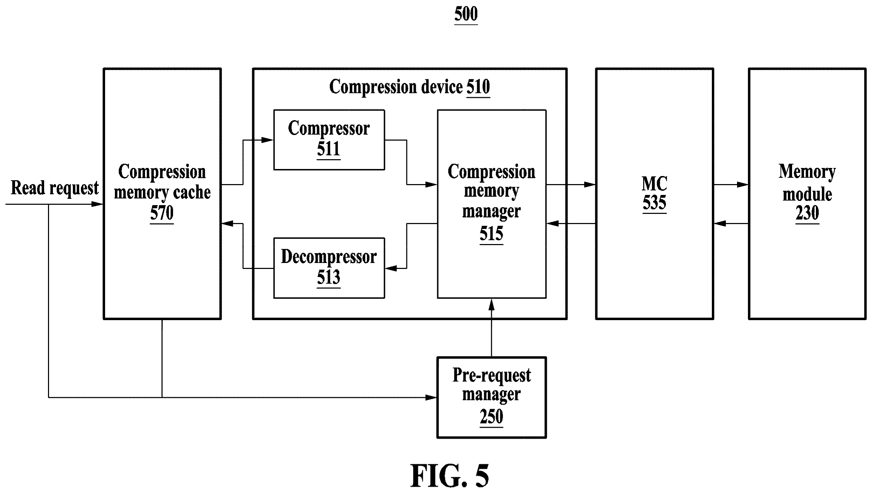

An implementation in which the memory processing unit 111 is mounted on the memory device 110 is mainly described herein, but examples are not limited thereto. The memory processing unit 111 may be implemented integrally with the host processor, the memory device 110, or other devices. In addition, although FIG. 1 shows the MC 155 included in the host 150 side, examples are not limited thereto. The memory module 113 may include an MC (not shown), and the host 150 may include a cache. The memory processing unit 111 (e.g., the PNM unit) may be positioned between the host 150 and a MC (not shown) of the memory module 113. FIGS. 5 to 10 below describe an example in which the memory processing unit is a compression device herein, however, examples are not limited thereto. For example, the memory processing unit may be a quantization unit or an acceleration unit. Further, although a memory device 110 is mainly described herein, the techniques described with respect to the memory device 110 may be applied to various types of peripheral devices including the memory module 113 and the memory processing unit 111. The memory processing unit 111 may be implemented integrally with a CXL switch, and the MC 155, and an interface unit. More detailed structure of the memory device 110 is described with reference to FIG. 2, and the operation of the memory device 110 is described with reference to FIG. 3.

As large-scale artificial intelligence (AI) applications become widespread, the required amount of memory is rapidly increasing. When a system of distributed servers is adopted to secure a large-capacity memory, total cost of ownership (TCO) may increase and the performance of Al inference may deteriorate. Scaling memory capacity on a single server is inevitable, and a current data center spends a significant ratio (e.g., about 33%) of the total server construction cost on securing the memory. To construct a low-cost and large-capacity memory in hyperscalers, CXL memory module-DRAM (CMM-D) products may be adopted. In such CMM-D products, a memory compression technology may be introduced to secure additional memory capacity for various applications including, for example, an open compute project (OCP). The compression memory technology advantageously expands capacity, however, disadvantageously, the memory compression technology introduces additional latency due to the compression and decompression process needed for memory accesses. Implementations of the memory device 110 described herein may taking steps towards obtain decompressed data for a host request in parallel with the operation of determining whether a cache hit occurs for the host request, and therefore, the overall system latency may be reduced even when the data being requested is compressed with a high compression ratio (that is, the latency caused by decompressing highly compressed data may be mitigated).

For example, data of a memory itself may be stored in a compressed format, and time required for the decompression may delay memory access time. Decompression latency may include (i) the cost of accessing a compression transformation table directory (e.g., metadata) containing information required for the decompression of a particular piece of data (pieces of stored data may be compressed according to different compression parameters), (ii) the cost of retrieving the compressed data from a memory, and iii) the cost of decompressing the retrieved data. Some architectures may hide the aforementioned latency cost of decompression latency by disposing a cache in the middle. Three known memory mapping methods for using a cache, include (i) direct mapping for mapping memory addresses and cache blocks one-to-one; (ii) a set associative cache in which cache blocks are configured as a set and a set for memory blocks is determined; and (iii) fully associative cache in which memory blocks may be allocated in any set. Set associative cache caches and fully associative caches in particular may have significant latency in determining a cache hit or a cache miss. When a cache is used in the manner described above in a large-capacity memory system, there may be latency (e.g., tag match latency) to determine a cache hit or cache miss. Implementations of the memory device 110 described herein may reduce the tag match latency.

FIG. 2 illustrates a memory device, according to one or more embodiments.

In an example implementation, a memory device 200 may receive an access instruction (e.g., a read request) from the host 150. The memory device 200 may perform operations to return data (or a value) corresponding to the received access instruction. For example, the memory device 200 may include a memory processing unit 210, a memory module 230, a pre-request manager 250, and a cache 270. Notably, the received access instruction may be transmitted to both the cache 270 and the pre-request manager 250, which, as described below, may reduce latency in satisfying the access instruction (e.g., read request). The cache 270 may be any of the types mentioned above.

In parallel with the access instruction being handled by the pre-request manager 250, the cache 270 may determine whether a read instruction received from the host 150 is a cache hit in response to the read request.

The memory module 230 may store data like the memory module 113 described above with reference to FIG. 1. The memory module 230 may, for example, store data in a compressed form.

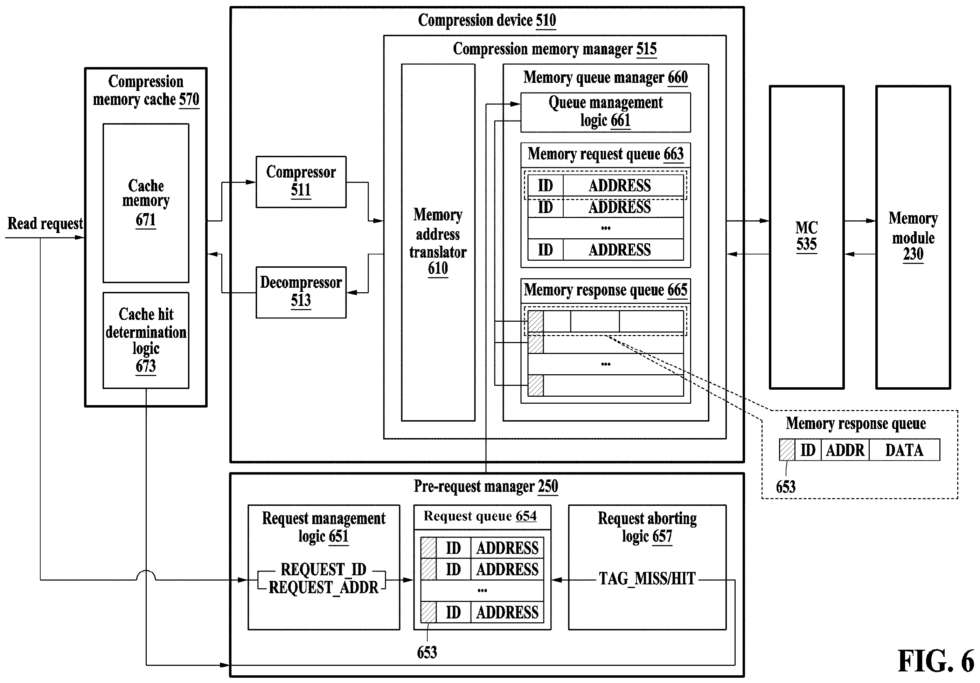

The pre-request manager 250 may provide the memory processing unit 210 with a pre-request for performing at least one operation of operations that would ordinarily be performed for determining data corresponding to the read request, which may be done before completion of the cache's 270 determination of whether the read request is hit in the cache 270. The pre-request may be a request that is provided in advance to the memory processing unit 210 before it is determined whether the read request results in a cache hit or a cache miss in the cache 270. The pre-request may be/include the same instruction as the read request received from the host by the cache 270, but is not limited thereto. According to an example, multiple operations may be associated with determining data corresponding to the read request, and the memory processing unit receiving the pre-request may perform at least one of these operations (e.g., a partial operation), which may be performed independently of whether the same read request handled by the cache 270 results in a hit or a miss. The least one operation corresponding to the pre-request (among the operations associated with the read request) may also be referred to as a preliminary operation. An operation following the preliminary operation may also be referred to as a subsequent operation. As described later, the subsequent operation is aborted in the case of a corresponding cache hit by the cache 270 handling the corresponding/twin read request, and the preliminary operation and the subsequent operation may be distinguished based on the timing at which the read request is controlled in a memory request queue (e.g., memory request queue 663 shown in FIG. 6) managed by the memory processing unit (e.g., a time point of making a request to a memory module (e.g., memory module 230) or a time point at which a response is received from the memory module). Which timing distinction is relevant may depend on the implementation or embodiment, as described below.

The pre-request manager 250 may include registers for storing a request queue (e.g., request queue 653 shown in FIG. 6) and a control logic for managing the request queue, including, for example, aborting requests in the memory request queue. The request queue may store requests to the memory module 230. The control logic may include, for example, one or more logic circuits (e.g., a request management logic) for managing (e.g., adding and/or removing) a request received from the host 150, and one or more logic circuits (e.g., a request aborting logic) for aborting a memory request determined to correspond to a cache hit. The request management logic and the request aborting logic may be implemented integrally or separately.

The memory processing unit 210 may perform the at least one operation in response to the reception of the pre-request. As described above, the memory processing unit 210 may perform some of the operations for determining data to be returned to the host 150 in response to the pre-request (e.g., a read request transmitted and received from the host in advance of determining whether a cache miss occurs). For example, one or more of subsequent operations following the at least one operation (e.g., the preliminary operation) corresponding to the pre-request may be dependent on the preliminary operation. To perform the subsequent operation, result data (or a result value) according to the preliminary operation may be required.

For example, an address (e.g., a host address) managed by the host 150 and an address (e.g., a device address) managed by the memory device 200 may be different for the same data (or value). The memory device 200 may translate the host address into the device address to access an actual location in the memory module 230 where data is stored, and load the data. For example, the device address may indicate a location within the memory module 230 where metadata is stored, and the memory device 200 may use the metadata to access the location where compressed data is stored. Metadata may include information used to obtain requested data. For example, when the requested data is compressed, metadata required to obtain the compressed data (e.g., a compressed size and a location of the compressed data, or compression parameters) may be requested. The memory device 200 may obtain the metadata used to obtain the compressed data prior to loading the compressed data.

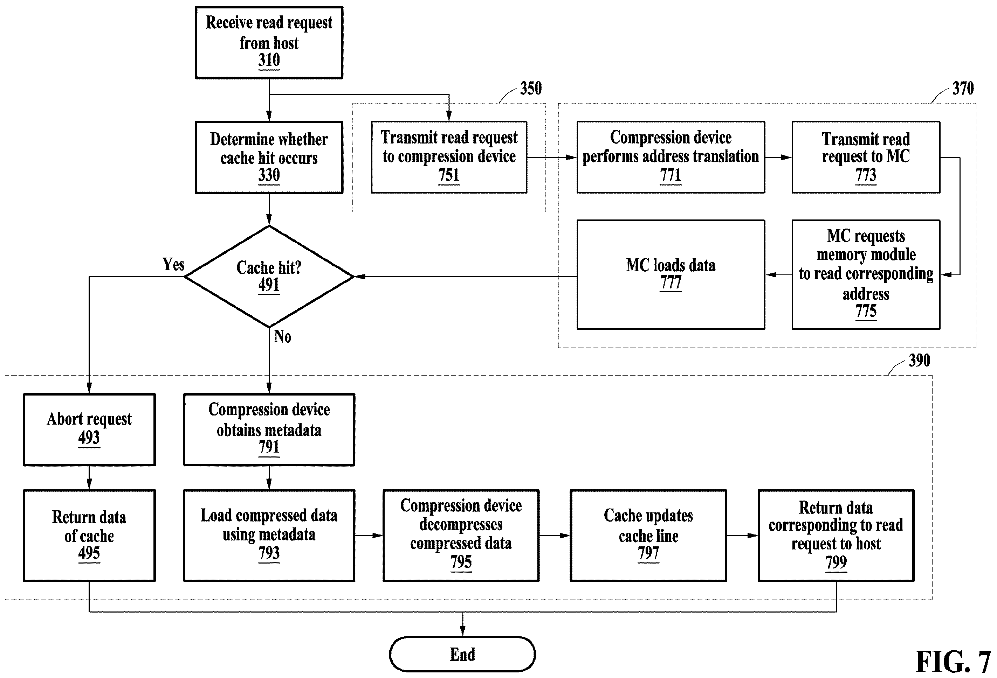

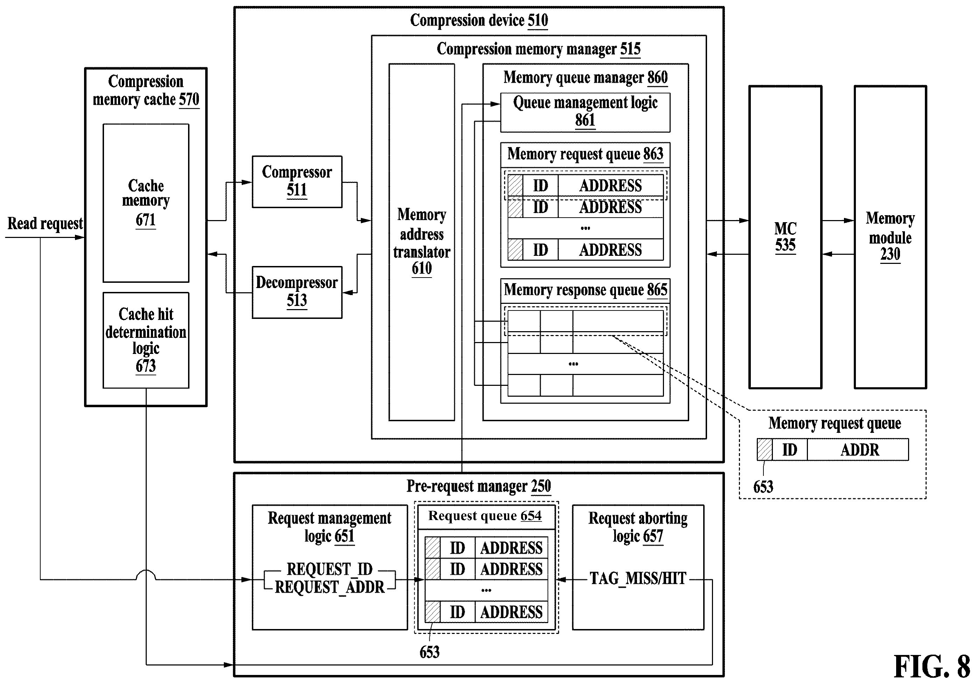

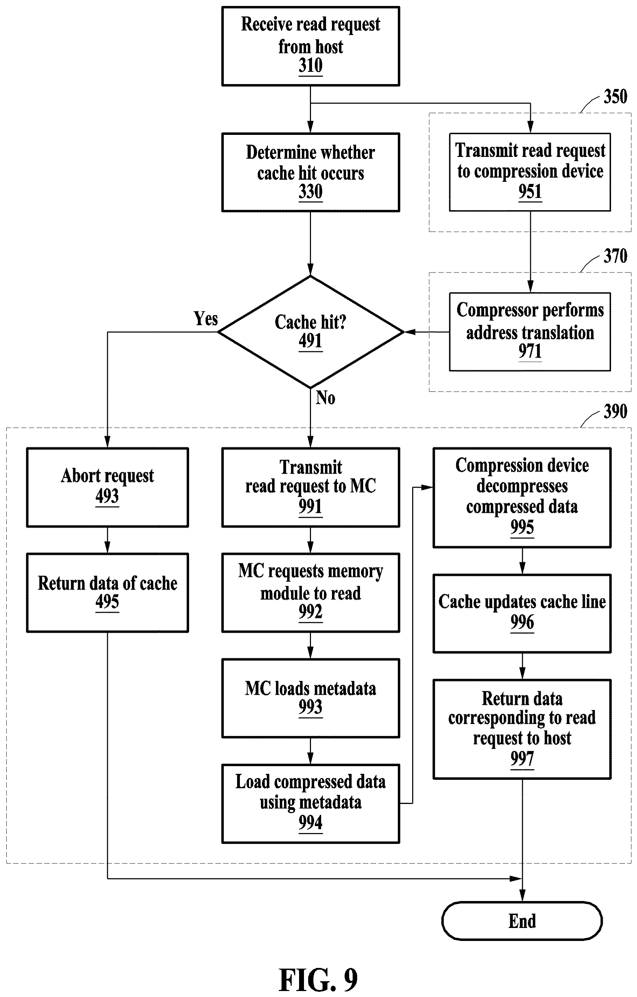

As described later, the memory processing unit 210 may, as the at least one operation performed in response to the pre-request, perform: (i) address translation and obtaining of metadata (see FIGS. 6 and 7), or, in another embodiment, (ii) only address translation (see FIGS. 8 and 9).

The memory device 200 may return data obtained from the memory module 230 through the memory processing unit 210 to the host 150 in the case of a cache miss, and may return data hit in the cache 270 to the host 150 in the case of a cache hit. For example, in the case of a cache miss, the memory device 200 may obtain the requested data (of the miss) by performing the subsequent operation after the at least one operation corresponding to the pre-request has been performed through the memory processing unit 210 (this pre-performance of data retrieval may decrease latency in the case of a cache miss). In this case, the memory device 200 may return data originated from the memory module 230 to the host 150 as the requested data. In the case of a cache hit, the memory device 200 may return data already included in the cache 270 (or data derived from the cache 270) to the host 150. Moreover, in the case of the cache hit, additional processing in the memory processing unit 210 becomes unnecessary, and therefore, operations following the operation corresponding to the pre-request (operations that would otherwise complete, or facilitate completion, of the requested data from the memory module 230) may be aborted.

For reference, the memory processing unit 210 may perform at least one operation according to the pre-request in parallel and/or independently of the operation of determining whether a cache hit or a cache miss occurs in the cache 270. The at least one operation according to the pre-request may be completed before the cache hit determination operation is completed, but is not limited thereto; depending on implementation, at least one operation according to the pre-request may be completed after the cache hit determination operation is completed.

The pre-request management may allow the memory device 200 to minimize tag-matching latency described above in terms of the host 150. For example, in the memory device 200, the memory processing unit 210 may receive an access instruction (which is also given to the cache 270) in advance through the pre-request manager 250. When transmissions of requests for the memory module 230 are required to return the requested data to the host 150, the memory device 200 according to an example may transmit at least one request in advance, or perform preparation for transmitting the request before the corresponding determination of a cache miss (or a cache hit) is completed. For example, when decompression is required to return data requested by the host 150, address translation, obtaining of metadata for decompression, obtaining of compressed data using metadata, and/or decompression of compressed data may be performed as described above prior to the cache hit/miss determination. Since the memory device 200 may perform the determination of whether a cache hit occurs in parallel with the address translation and the obtaining of the metadata, the latency required to return the decompressed data may be significantly reduced (since many operations therefor may have already been completed when the cache hit/miss determination is made). On the other hand, in prior memory systems, and in particular compressed memory systems, address translation and the like may begin only after the determination that a cache miss occurs, and the host 150 may have to wait a considerable amount of time until data is returned from a memory.

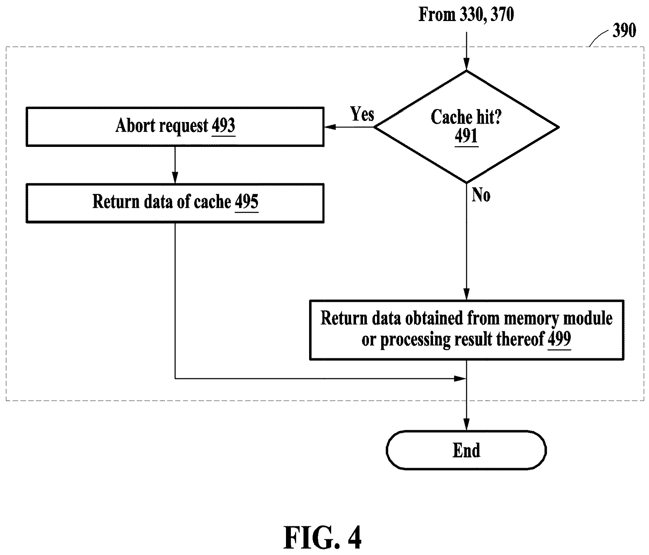

FIG. 3 illustrates an example of a method of operating a memory device, according to one or more embodiments. FIG. 4 illustrates an example of an operation in a case of a cache hit and an operation in a case of a cache miss, according to one or more embodiments.

In operation 310, a memory device (e.g., memory device 200) may receive a read request from a host (e.g., host 150).

In operation 330, the memory device may determine whether a cache hit occurs. For example, the memory device may find a requested block in any of n cache lines within a cache memory of a cache (n greater than or equal to 1). The memory device may compare a tag of a read request received from the host with a tag of a cache line in the cache memory. The memory device may find a cache line having a tag that matches the tag of the read request among tags of the respective cache lines. When the cache line found to have a tag that matches the tag of the read request is found, the memory device may check whether the data within that cache line is valid. The memory device (e.g., a cache hit determination logic in a cache) may determine that a cache hit occurs when the data in the cache line with the matching tag is valid. The memory device may determine that a cache miss occurs when the tag does not match or when the data in the cache line is invalid.

In operation 350, the memory device may provide, to a memory processing unit, a pre-request corresponding to the read request of operation 310 (in some implementations, the pre-request may be a duplicate, or near-duplicate, of the read request received from the host in operation 310). In operation 370, the memory processing unit of the memory device may perform at least one operation in response to the pre-request. As described above, the at least one operation corresponding to the pre-request may be a partial operation among multiple operations that would ordinarily be performed to return the requested data to the host in the case of a cache miss. That is, the at least one operation may be a subset of operations ordinarily performed by the memory device to service a read request. Operations 350 and 370 described above may be performed independently of and/or in parallel with the operation of determining whether a cache hit occurs in operation 330. The pre-request manager may provide the memory processing unit with the pre-request before the determining of whether the cache hit occurs is completed (in some types of cache schemes, the time to determine a cache hit/miss can be significant).

In operation 390, the memory device may return data in a way that depends on whether there was a cache hit in operation 330. In the case of a cache hit, the memory device returns the requested data as obtained from the cache. In the case of a cache miss at operation 330, the data returned to the host is obtained from the memory module through the pre-processing of the memory processing unit. For example, in operation 491 (FIG. 4), the memory device may determine whether the cache hit occurs. How the memory device returns the requested data may differ between the case of a cache hit and the case of a cache miss, as described below.

In operation 493, in the case of a cache hit, the memory device may abort the pre-request. Specifically, the pre-request manager may instruct the memory processing unit to abort an operation subsequent to the at least one operation when the cache hit occurs for the read request. And, also in response to the cache hit, in operation 495, the memory device may return the requested data as obtained from the cache.

In operation 499, when a cache miss occurs, the memory device may return to the host the requested data as obtained from the memory module or a processing result thereof. Also in response to the cache miss, the memory processing unit may perform other operation(s) subsequent to the at least one operation, thereby obtaining the requested data from the memory module. Further in response to the cache miss occurring, the memory device may update the cache with the data to be returned to the host.

FIG. 5 illustrates an example of a memory device in which a memory processing unit is a compressor, according to one or more embodiments.

A memory device 500 shown in FIG. 5 is, for example, the memory processing unit 210 shown in FIG. 2, and may include a compression device 510. The cache 270 of FIG. 2 may be implemented as a compression memory cache 570.

The compression device 510 may include a compressor 511, a decompressor 513, and a compression memory manager 515. **In** some implementations, the compressor 511 and decompressor 513 may be configured to implement multiple compression algorithms.

The compressor 511 may compress data requested to be written. The decompressor 513 may decompress compressed data. The compression memory manager 515 may request a MC 535 to write compressed data to a specific address or to read compressed data in a specific address. However, examples are not limited thereto, and the configuration of the compression device 510 is not limited thereto and may include an assembly of logic elements (e.g., a logic circuit) that implement at least one of a decoding logic, a decompression logic, an encoding logic, or a compression logic. The logic circuit included in the memory processing unit (e.g., the compression device 510) may be implemented integrally with a buffer unit (e.g., a buffer chip) of the memory device 500.

The MC 535 may transmit data (or a value) to be written to a specified address to the memory module 230, or transmit data (or a value) read from a specified address from the memory module 230, in response to the request from the compression device 510.

When the memory device 500 receives a read request for compressed data from a host, the compression memory cache 570 may determine whether a cache hit occurs. As described above, a pre-request may be transmitted to the compression device 510 by the pre-request manager 250. While determining whether a cache hit occurs in the compression memory cache 570, the compression device 510 may perform a preliminary operation in parallel (i.e., may begin operations, or pre-processing, as if a cache hit will not occur). For example, the compression memory manager 515 may request metadata for address translation and/or decompression to the MC 535. For example, the metadata may include a location of the compressed data and a size of the compressed data.

When a cache hit occurs, the memory device 500 may return data obtained from the compression memory cache 570 to the host.

However, when a cache miss occurs, the memory device 500 may perform a subsequent operation to obtain the decompressed data from the memory module 230. When the address translation and the obtaining of metadata are performed as the preliminary operation, the compression device 510 may obtain compressed data using metadata, and perform decompression of the obtained data. When the address translation is performed as the preliminary operation, the compression device 510 may perform the obtaining of the metadata, the obtaining of the compressed data using the metadata, and decompression of the obtained data. The memory device 500 may update the cache by inserting the decompressed data into the cache, as well as return the decompressed data to the host.

FIGS. 6 and 7 illustrate an example in which a memory device including a compressor processes a response from a memory module (e.g., memory module 230) according to whether a cache hit occurs, according to one or more embodiments.

In the case of a cache hit, the memory device may transmit the pre-request (e.g., a read request received in advance) to the memory module 230 to receive data, and then abort the request in the compression device 510 (the pre-request may be transmitted independent of the cache hit occurring).

The compression memory manager 515 may include a memory address translator 610, a memory manager, and a memory queue manager 660. The memory queue manager 660 may manage a memory request queue 663 and a memory response queue 665).

The memory address translator 610 may translate an address of a read instruction. For example, the memory address translator 610 may translate the address of the read instruction into an address indicating a location within the memory module 230 where corresponding metadata is stored.

As noted, the memory queue manager 660 may manage a memory queue. The memory queue may include the memory request queue 663 and the memory response queue 665. The memory request queue 663 may include an identifier (ID) and an address for each request. The memory response queue 665 may include data (or a value) received from the memory module 230 as a response to the request, in addition to the ID and the address corresponding to each request.

An abort flag field 653 may be included with each request in the memory request queue 663 (e.g., a response queue) and/or with each response in the memory response queue 665 managed by a memory processing unit (e.g., a compression memory management unit). The abort flag field 653 is a field whose value indicates whether to abort the request of which it is a part, and may include a value of a 1-bit as an example. In the example shown in FIG. 6, the memory response queue 665 may further include, in each entry thereof, the abort flag field 653 in addition to the ID, the address, and the data.

The pre-request manager 250 may include a request management logic 651, a request abort logic 657, and a request queue 654. For example, when a read request is received from a host, the request management logic 651 may update information on the read request to the request queue 654. For example, the request management logic 651 may update an ID (REQUEST_ID) and an address (REQUEST_ADDR) of the read request to the request queue 654. The request queue 654 managed by the pre-request manager 250 may include the abort flag fields 653 of the respective requests therein. The request abort logic 657 may receive a signal indicating a cache hit or a cache miss from the compression memory cache 570. For example, in the compression memory cache 570, a cache hit determination logic 673 may determine whether data (or a value) corresponding to the read request received from the host is hit in a cache memory 671. The request abort logic 657 may, for each request in the request queue, set a bit value of the abort flag field 653 based on a corresponding signal indicating a cache hit or a cache miss. For example, in the case of a cache hit, the bit value (e.g., the abort flag value) of the abort flag field 653 may be set to 1, and in the case of a cache miss, the bit value of the abort flag field 653 may be set to 0.

The pre-request manager 250 may be notified whether the read request is hit or missed in the cache memory 671. For example, the memory processing unit (e.g., the compression device 510) may transmit the read request to the memory module 230, and receive a response, in which data is added to (or provided for) the read request, from the memory module 230. The pre-request manager 250 may provide the memory processing unit with a flag value indicating whether the read request is hit. The memory processing unit may set the flag value indicating whether the read request is hit in a corresponding response in the memory response queue 665. A queue management logic 661 of the memory queue manager 660 may set a value of the abort flag field 653 in the response entry having the corresponding ID and address in the memory response queue 665, based on the ID and the address of each request in the request queue of the pre-request manager 250. As described above, for each response, when the corresponding read request is a cache hit, a value of 1 may be set in the abort flag field 653, and when the corresponding read request is a cache miss, a value of 0 may be set in the abort flag field 653. In FIGS. 6 and 7, an operation is described in an example in which entries in the response of the memory queue have the abort flag fields 653.

For example, in operation 751, the pre-request manager 250 may transmit the read request to the compression device 510. As described above, the pre-request may be transmitted to the compression device 510 in parallel with (or independent of) the determination of whether the cache is hit according to operation 330 (e.g., simultaneously with the reception of a read instruction from the host or within a threshold time point of receiving the read instruction).

According to an example, the previously mentioned "at least one operation corresponding to the pre-request" may include a data loading operation (corresponding to the read request) of loading data from the memory module 230. The memory processing unit may start the data loading operation before the determination of whether the cache hit occurs is completed (e.g., simultaneously with the reception of the read instruction from the host). The memory processing unit may receive data (corresponding to the read request) from the memory module 230 until the determination of whether the cache hit occurs is completed. For example, as part of receiving the data, in operation 771, the compression device 510 may perform the address translation. In operation 773, the compression device 510 may transmit the read request to the MC 535. In operation 775, the MC 535 may request the memory module 230 to read the corresponding address (e.g., an address indicating the location of metadata of the read request). In operation 777, the MC 535 may load data (e.g., metadata).

In operation 493, the memory device may abort the request (or put another way, may abort activities related to carrying out the pre-request). The memory processing unit (e.g., the compression device 510) according to an example may abort the operation subsequent to the pre-request when the read request incurs a cache hit. For example, the pre-request manager 250 may provide the memory processing unit with the read request including the abort flag value (e.g., a bit value of 1 set/recorded in the abort flag field 653), and may do so in response to the cache hit occurring for the read request. The memory processing unit may remove or ignore a response (in the memory response queue 665) corresponding to the read request including the abort flag value without subsequent processing of the response to the read request including the abort flag value in the memory response queue 665. When a value of the abort flag field 653 of any response in the memory response queue 665 indicates a value corresponding to aborting (e.g., 1 as an abort flag value), the memory queue manager 660 may, for example, abort that response.

For example, the memory queue manager 660 may, in response to the reception/detection of a value (e.g., the abort flag value) corresponding to the cache hit for any request from the pre-request manager 250, remove a corresponding response indicating the abort flag value from the memory response queue 665. Since the response is removed from the memory response queue 665, subsequent operations associated therewith, that would otherwise be performed, may be aborted without being performed. **In** another example, the memory queue manager 660 may not provide a response with the value (e.g., the abort flag value) corresponding to the cache hit in the abort flag field 653 to other devices and/or modules. Since the transmission/handling of the response (e.g., the data included in the response) is omitted, an operation subsequent to the response that would otherwise be performed may instead be aborted (not performed).

When it is determined that a cache miss occurs for the read request, the memory processing unit may obtain data (or continue obtaining data) to be returned to the host based on data loaded from the memory module 230. The memory processing unit may continue reading data for the memory module 230 according to a queue (e.g., a response queue) when the read request is the cache miss. When a value of an abort flag bit of any response indicates other values (e.g., 0), the memory queue manager 660 may maintain the response so that the operation subsequent to the response is performed. For example, in operation 791, as part of the subsequent operation, the compression device 510 may obtain metadata for decompression. In operation 793, the compression device 510 may load compressed data using the metadata. The memory processing unit (e.g., a compression device 510) may obtain the compressed data by transmitting a read request based on an address indicating a storage location of the compressed data (which is included in the metadata) to the MC 535. In operation 795, the compression device 510 may decompress the compressed data. In operation 797, the cache may update a cache line. The cache may update the decompressed data into the cache line. In operation 799, the memory device may return data corresponding to the read request to the host.

FIGS. 8 and 9 illustrate an example in which a memory device including a compressor processes a request for a memory module according to whether a cache hit occurs, according to one or more embodiments.

The memory device according to an example may perform only address translation of a pre-request (e.g., a read request received in advance), and abort the request in the compression device 510 in a case of a cache hit. That is to say, the only operations performed in advance, independent of cache hit determination, may be related to address translation (decompression and the like may not be performed as part of handling the pre-request).

Most of the blocks of the compression device 510 shown in FIG. 8 may be similar to those described above with reference to FIG. 6. However, a memory queue manager 860 in the compression memory manager 515 shown in FIG. 8 may be different from the memory queue manager 660 described above with reference to FIG. 6. In FIG. 6, the memory response queue 665 includes the abort flag field 653, however, in FIG. 8, instead, the memory request queue 863 includes the abort flag field. For example, in a memory queue of the memory queue manager 860, each entry in a memory request queue 863 may include an ID, an address, and the abort flag field 653. The memory response queue 865 may include the ID, the address, and data (or a value) received from the memory module 230 as a response to the request, but an abort flag field is not included. In some implementations, both a memory request queue and a memory response queue 865 may include an abort flag, however, the memory device may operate in different modes; in one mode, the abort flag is operative in the memory response queue only, and in another mode the abort flag is operative in the memory request only.

For example, in operation 951, the pre-request manager 250 may transmit the read request to the compression device 510. As described above, the pre-request may be transmitted to the compression device 510 in parallel with the determination of whether a cache hit occurs according to operation 330.

According to an example, the previously mentioned "at least one operation corresponding to the pre-request" may include an address translation operation for the read request. The memory processing unit may start an address translation operation for the read request before the determination of whether the cache hit occurs is completed (e.g., simultaneously with the reception of the read instruction from the host). The memory processing unit may perform the translation of the address corresponding to the read request until (or independent of) the determination of whether the cache hit occurs is completed. For example, in operation 971, the compression device 510 may perform the address translation. A memory processing unit (e.g., the compression device 510) may wait with (or have available) the translated address (e.g., an address indicating the location of metadata) until the cache hit or cache miss determination is made. The compression device 510 may hold the transmission of a request to the MC 535 until the determination of whether the cache hit occurs is completed.

In operation 493, in the case of a cache hit, the memory device may abort the request (or, the pre-request). The pre-request manager 250 according to an example may have the memory processing unit abort the read request in response to the cache hit occurring for the read request.

For example, the pre-request manager 250 may provide the memory processing unit with the read request including an abort flag value in response to the cache hit occurring for the read request. The memory queue manager may abort the request when a value of any abort flag field in the memory request queue 863 has a value indicating an abort. The memory queue manager may include a queue management logic 861 for handling the request having the abort flag value in response to reception of a value (e.g., the abort flag value) indicating a cache hit for any request from the pre-request manager 250. The queue management logic 861 may record a value of the abort flag field 653 in a request having the corresponding ID and address in the memory request queue 863, based on the ID and address of each request in the request queue of the pre-request manager 250.

However, examples are not limited thereto. When the order of the memory request queue 863 of the compression device 510 (e.g., the memory request order) is the same as the order in which the determination of whether the cache hit occurs is completed, it may be possible to abort the request of the memory request queue 863 without using the request queue of the pre-request manager. For example, a memory processing unit (e.g., the compression device 510) may abort or maintain each request in the memory request queue 863 based on determination results of whether the cache hit occurs received sequentially from the pre-request manager 250. When the queue management logic 861 receives the determination results indicating the cache hit in any order, the queue management logic 861 may abort the request of the corresponding order in the memory request queue 863.

When it is determined to abort any read request based on a cache hit, the memory processing unit may remove the read request from the memory request queue 863. However, the aborting method is not limited thereto, and the memory processing unit may record the abort flag value (e.g., 1) in the abort flag field of a request corresponding to the cache hit in the memory request queue 863, effectively deactivating the request. The memory processing unit may abort the request by not transmitting the request having the abort flag value to the MC 535.

When it is determined that a cache miss occurs for the read request, the memory processing unit (e.g., the compression device) may load data (e.g., metadata) from the memory module 230 using the translated address. The memory processing unit may obtain data to be returned to the host using the loaded data (e.g., metadata). The memory processing unit may load compressed data using metadata, and obtain the data to be returned by decompressing the compressed data. For example, in operation 991, the compression device 510 may transmit the read request to the MC 535. In operation 992, the MC 535 may request a read to the memory module 230. As described above, the translated address may indicate the location of metadata. In operation 993, the MC 535 may load metadata. As described above, the metadata may be used to obtain compressed data, and may include an address indicating the location where the compressed data is stored. In operation 994, the compression device 510 may load compressed data using the metadata. In operation 995, the compression device 510 may decompress the compressed data. In operation 996, the cache may update a cache line with the decompressed data. In operation 997, the memory device may return data corresponding to the read request (e.g., the decompressed data) to the host.

For reference, the aborting in the memory response queue in a case of the cache hit has been described with reference to FIGS. 6 and 7, and the aborting in the memory request queue has been described with reference to FIGS. 8 and 9, however, the aborting in the memory response queue and the aborting in the memory request queue may be selectively performed depending on a design. For example, in the memory queue manager 860, both the memory request queue 663, 863 and the memory response queue 665, 865 may include the abort flag field. The memory processing unit (e.g., the compression device 510) may selectively abort (e.g., remove) each request in the memory request queue 663, 863 or the memory response queue 665, 865. For example, the memory processing unit may obtain data in advance for a request requiring less latency, and then abort (e.g., remove/deactivate) it in the memory response queue 665, 865 in response to the cache hit. The memory processing unit may perform only the address translation for a request requiring relatively less stringent latency, and then abort (e.g., remove) it in the memory request queue 663, 863 in response to the cache hit.

The memory device according to an example may be integrated into a CXL system (e.g., CMM-D), as a non-limiting example. For example, in a compression memory system used in CMM-D, an access instruction may be transmitted from a host to the memory device via a CXL interface. In latency required to process a read instruction for compressed data and return the data, the latency consumed in the compression memory cache 570 and the compression device 510 may be on average about 50%. The time taken by the memory device to prepare decompressed data by the operations described above with reference to FIGS. 1 to 9 may be reduced (the decompression itself by about 10%). Therefore, the total time may be reduced by about 5% on average. Effective capacity may be increased by more than three times on average in the compression memory system, while the latency may be effectively reduced. Memory devices according to examples described herein may provide a compression memory system having reduced latency and high compression efficiency for a read, without introducing complex hardware.

The examples described herein may be implemented using a hardware component, a software component, and/or a combination thereof. A processing device may be implemented using one or more general-purpose or special-purpose computers, such as, for example, a processor, a controller and an arithmetic logic unit (ALU), a DSP, a microcomputer, an FPGA, a programmable logic unit (PLU), a microprocessor or any other device capable of responding to and executing instructions in a defined manner. The processing device may run an OS and one or more software applications that run on the OS. The processing device also may access, store, manipulate, process, and create data in response to execution of the software. For purpose of simplicity, the description of a processing device is used as singular; however, one skilled in the art will appreciate that a processing device may include multiple processing elements and/or multiple types of processing elements. For example, the processing device may include a plurality of processors, or a single processor and a single controller. In addition, different processing configurations are possible, such as parallel processors.

The software may include a computer program, a piece of code (e.g., microcode), an instruction, or some combination thereof, to independently or uniformly instruct or configure the processing device to operate as desired. Software and data may be stored in any type of machine, component, physical or virtual equipment, or computer storage medium or device capable of providing instructions or data to or being interpreted by the processing device. The software also may be distributed over network-coupled computer systems so that the software is stored and executed in a distributed fashion. The software and data may be stored by one or more non-transitory computer-readable recording media.

The methods according to the above-described examples may be recorded in non-transitory computer-readable media including program instructions to implement various operations of the above-described examples. The media may also include, alone or in combination with the program instructions, data files, data structures, and the like. The program instructions recorded on the media may be those specially designed and constructed for the purposes of examples, or they may be of the kind well-known and available to those having skill in the computer software arts. Examples of non-transitory computer-readable media include magnetic media such as hard disks, floppy disks, and magnetic tape; optical media such as CD-ROM discs and/or DVDs; magneto-optical media such as optical discs; and hardware devices that are specially configured to store and perform program instructions, such as read-only memory (ROM), random access memory (RAM), flash memory, and the like (but not a signal per se). Examples of program instructions include both machine code, such as produced by a compiler, and files containing higher-level code that may be executed by the computer using an interpreter.

The above-described hardware devices may be configured to act as one or more software modules in order to perform the operations of the above-described examples, or vice versa.

The computing apparatuses, the electronic devices, the processors, the memories, the controllers, the information output system and hardware, the storage devices, and other apparatuses, devices, units, modules, and components described herein with respect to FIGS. 1-9 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. **In** other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-9 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. **In** one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as a multimedia card or a micro card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. **In** one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above disclosure, the scope of the invention is defined by the enclosed claims.

## Claims

1. A memory device comprising:
a cache configured to make a cache-hit determination, in response to a read request from a host, the cache-hit determination determining whether the read request results in a hit to the cache;
a pre-request manager configured to provide a memory processing unit with a pre-request for performing at least one operation of operations for determining data corresponding to the read request before completion of the determination of whether the read request results in a hit in the cache, wherein the pre-request corresponds to the read request or is a copy of the read request; and
the memory processing unit configured to perform the at least one operation in response to the reception of the pre-request,
wherein, data obtained from a memory module through the memory processing unit based on the pre-request is returned to the host in a case of the cache-hit determination determining a cache miss has occurred, and data hit in the cache is returned to the host in a case of the cache-hit determination determining a cache hit.

2. The memory device of claim 1, wherein the pre-request manager is configured to instruct the memory processing unit to abort an operation subsequent to the at least one operation in response to the cache-hit determination determining a cache hit for the read request.

3. The memory device of claim 1 or 2, wherein
the pre-request manager is configured to provide the memory processing unit with a read request comprising an abort flag value in response to the cache-hit determination of a cache hit determining a cache hit for the read request, and
the memory processing unit is configured to remove a response corresponding to the read request comprising the abort flag value without subsequent processing of the response to the read request comprising the abort flag value in a memory response queue.

4. The memory device of one of claims 1 to 3, wherein
the pre-request manager is configured to notify the memory processing unit of aborting of the read request in response to the cache-hit determination determining a cache hit for the read request, and
the memory processing unit is configured to remove the read request from a memory request queue or to deactivate the read request in the memory request queue.

5. The memory device of one of claims 1 to 4, wherein the memory processing unit is configured to perform an operation subsequent to the at least one operation in response to the cache-hit determination determining a cache miss for the read request.

6. The memory device of one of claims 1 to 5, wherein
the at least one operation comprises a data loading operation corresponding to the read request, the data loading operation loading data from the memory module, and
the memory processing unit is configured to start the data loading operation before the cache-hit determination is completed.

7. The memory device of one of claims 1 to 6, wherein the memory processing unit is configured to:
receive the data corresponding to the read request from the memory module before the cache-hit determination is completed; and
in response to the cache-hit determination determining a cache miss for the read request, obtain data to be returned to the host based on data loaded from the memory module.

8. The memory device of one of claims 1 to 7, wherein
the at least one operation comprises an address translation operation for the read request, and
the memory processing unit is configured to start the address translation operation for the read request before the cache-hit determination is completed.

9. The memory device of one of claims 1 to 8, wherein the memory processing unit is configured to:
perform translation of an address corresponding to the read request before the cache-hit determination is completed; and
in response to the cache-hit determination determining a cache miss for the read request, load data from the memory module using the translated address and obtain data to be returned to the host using the loaded data.

10. The memory device of one of claims 1 to 9, wherein the memory device is configured to update data, which is to be returned to the host, into the cache, in response to the cache-hit determination determining a cache miss for the read request.

11. A method of operating a memory device, the method comprising:
making a cache-hit determination for a read request received from a host in response to the read request;
providing a memory processing unit with a pre-request for performing at least one operation of operations for determining data corresponding to the read request before completion of the cache-hit determination of the read request, wherein the pre-request corresponds to the read request or is a copy of the read request;
performing the at least one operation in response to the reception of the pre-request; and
returning data obtained from a memory module through the memory processing unit to the host in a case of the cache-hit determination determining a cache miss, and returning data hit in the cache to the host in a case of the cache-hit determination determining a cache hit.

12. The method of claim 11 adapted to operate the memory device according to one of claims 1 to 10.

13. A method performed by a compressed memory device comprising a cache and a memory module storing compressed data, the method comprising:
receiving, from a host, a read request for data, the read request comprising a host address;
based on the read request, making a determination that a cache-hit occurs for the host address in the cache;
based on receiving the read request, and before the determining of the cache-hit is completed, initiating operations to retrieve the data from memory module; and
based on the determining that the cache-hit occurred, aborting or not completing the operations to retrieve the data from the memory module.

14. The method of claim 13, wherein the operations include translating the host address to a memory address in the memory module.

15. The method of claim 13 or 14, wherein the operations include decompressing the requested data from the memory module.
